# EUROPEAN PATENT APPLICATION

(11) **EP 4 738 215 A1**
(43) Date of publication of application: **06.05.2026**
(21) Application number: 25211631.4
(22) Date of filing: 28.10.2025
(51) Int. Cl.: G06Q 10/0631, G06Q 10/101

(54) **MANAGEMENT APPARATUS AND METHOD, SYSTEM, PROGRAM, AND STORAGE MEDIUM**

(30) Priority: 30.10.2024 JP 2024190892
(71) Applicant: Canon Kabushiki Kaisha, Tokyo, 146-8501 (JP)
(72) Inventor: SUZUKI, Kiwamu, Tokyo, 146-8501 (JP)
(74) Representative: TBK

(57) **Abstract**

A management apparatus receives, from each of a plurality of terminal apparatuses, dynamic information that changes regardless of user operation of each of one or more of image capturing apparatuses managed by the respective terminal apparatus, first settings indicating a disclosure destination of the dynamic information, and implementation information regarding each image capturing apparatus currently implementing an image capture plan or not; receives, from each of a plurality of image capture planning apparatuses, an image capture plan that uses any of the image capturing apparatuses, and second settings indicating a disclosure destination of the dynamic information of the image capturing apparatus used in the image capture plan; determines the disclosure destination of the dynamic information based on the implementation information, the first settings, and the second settings; and controls to disclose the dynamic information to the determined disclosure destination.

## Description

### TECHNICAL FIELD

The present disclosure relates to a management apparatus and method, system, program, and storage medium.

### BACKGROUND

Conventionally, a news-gathering activity support system is provided for performing news-gathering activities, a planner makes a plan and prepares in advance equipment for the news-gathering activities such as a camera, a reporter, the location of news-gathering activities, date and time, contents, etc., and the planner and the reporter share the plan, thereby enabling the news-gathering activities to be conducted efficiently. Such a news-gathering activity support system allows seamless collaboration between the planner and the reporter. For example, when requesting an interview using the news-gathering activity support system, the planner first creates a news-gathering activity plan on the news-gathering activity support system, including a camera, a photographer, a location of news-gathering activities, date and time, contents of the interview, etc. Then, the reporter receives the news-gathering activity plan via an application on a smartphone, PC, etc.

Here, in order for reporters (photographers) to use the news-gathering activity support system, they must register the camera and the photographer themselves in the news-gathering activity support system. If the photographer belongs to a company, he or she registers the camera and the photographer himself/herself with the company they belong to in the news-gathering activity support system, while if the photographer is freelance, he or she registers the camera and the photographer himself/herself with all companies from which the photographer wants to receive the orders for news-gathering activities via the news-gathering activity support system. The planner looks at the information on the cameras and photographers registered in the system, finds a camera and photographer suitable for the news-gathering activity plan, and creates a news-gathering activity plan. In addition, dynamic information that changes regardless of user operations, such as the location information, power information, and network connection status of a camera, is updated periodically by obtaining information from the camera.

As a technique for collecting the dynamic information, Japanese Patent Laid-Open No. 2014-521160 discloses a technique for periodically collecting location information of photographers in a cloud, and when an incident occurs, calculating the shortest times for photographers to reach the location of the incident, and finding a photographer to whom it is easy to order to report the incident. In addition, as a technique for determining the disclosure destination of collected information, Japanese Patent Laid-Open No. 2015-111406 discloses a technique for controlling the disclosure destination of information by changing conditions for disclosing the information or issuing a warning in a case where the conditions for disclosing the information differ between a smartphone and a server.

### SUMMARY

The news-gathering activity support system collects dynamic information on a regular basis, but if the same camera is registered with a plurality of companies on the news gathering activity support system, as is the case with freelance photographers, the dynamic information will be disclosed to companies other than a company that requested the news-gathering activities during the news-gathering activities. In that case, the company that requested the news-gathering activities may be disadvantaged, as the location of news-gathering activities will become known to companies other than the company that requested the news-gathering activities.

On the other hand, in order for freelance photographers to receive more requests for news-gathering activities, it is preferable for them to disclose dynamic information to as many companies as possible when they are not conducting news-gathering activities.

As a technology for controlling disclosure destination, Japanese Patent Laid-Open No. 2015-111406 describes a technology for restricting the disclosure destination of information based on the strictest information disclosure conditions of smartphones and servers. However, this technology restricts the disclosure destination of dynamic information based on the strictest information disclosure conditions set by a photographer and companies. Therefore, for example, even if a photographer sets the dynamic information to be disclosed, if a company sets the dynamic information of the camera not to be disclosed, the dynamic information will not be disclosed to other companies even if the photographer has not received a request from that company.

The present disclosure has been made in consideration of the above situation, and makes it possible to disclose dynamic information of an image capturing apparatus in consideration of benefits of both a user of the image capturing apparatus and a person requesting image capture job using the image capturing apparatus.

The present disclosure in its first aspect provides an management apparatus as specified in claim 1. Optional features are specified in claim 2 to 12.

The present disclosure in its second aspect provides a system as specified in claim 13. Optional features are specified in claim 14.

The present disclosure in its third aspect provides a management method as specified in claim 15.

The present disclosure in its fourth aspect provides a computer program as specified in claim 16.

The present disclosure in its fifth aspect provides a computer-readable storage medium as specified in claim 17.

Features of the present disclosure will become apparent from the following description of embodiments with reference to the attached drawings. The following description of embodiments are described by way of example.

### BRIEF DESCRIPTION OF THE DRAWINGS

The accompanying drawings, which are incorporated in and constitute a part of the specification, illustrate embodiments of the present disclosure, and together with the description, serve to explain the principles of the embodiments.
FIG. 1 is a block diagram illustrating an example of the configuration of a news-gathering activity support system according to an embodiment of the present disclosure.
FIG. 2 is a block diagram illustrating a hardware configuration of an information processing apparatus according to the embodiment.
FIG. 3 is a block diagram illustrating a functional configuration of a camera management system according to the embodiment.
FIG. 4 is a block diagram illustrating an overview of disclosure destination control of dynamic information according to the embodiment.
FIG. 5 is a flowchart illustrating camera-side setting processing according to a first embodiment.
FIG. 6A is a diagram illustrating an example of a setting screen for camera-side disclosure settings according to the first embodiment.
FIG. 6B is a diagram illustrating disclosure destination/destinations of dynamic information according to the camera-side disclosure settings according to the first embodiment.
FIG. 7 is a diagram illustrating an example of a setting screen for news-gathering activity plan implementation settings according to the first embodiment.
FIG. 8 is a flowchart illustrating company-side setting processing according to the first embodiment.
FIG. 9A is a diagram illustrating an example of a setting screen for company-side disclosure settings according to the first embodiment.
FIG. 9B is a diagram illustrating the disclosure destination/destinations of dynamic information according to the company-side disclosure settings according to the first embodiment.
FIG. 10 is a flowchart of dynamic information disclosure control processing according to the first embodiment.
FIG. 11 is a diagram illustrating the disclosure destination/destinations of dynamic information resulting from a combination of news-gathering activity plan implementation settings, camera-side disclosure settings, and company-side disclosure settings according to the first embodiment.
FIGS. 12A and 12B are diagrams illustrating examples of combinations of camera-side disclosure settings, news-gathering activity plan implementation settings, and company-side disclosure settings according to the first embodiment.
FIG. 13 is a flowchart of news-gathering activity plan implementation setting processing according to a second embodiment.

### DESCRIPTION OF THE EMBODIMENTS

Hereinafter, embodiments will be described in detail with reference to the attached drawings. Note, the following embodiments are not intended to limit the scope of the claims. Multiple features are described in the embodiments, but it is not the case that all such features are required, and multiple such features may be combined as appropriate. Furthermore, in the attached drawings, the same reference numerals are given to the same or similar configurations, and redundant description thereof is omitted.

### <First Embodiment>

### - System Configuration

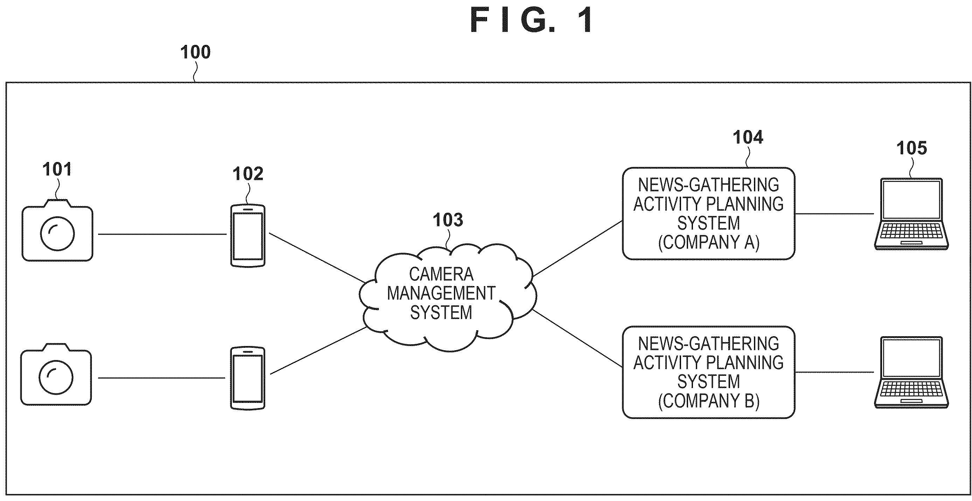

FIG. 1 is a system configuration diagram illustrating an example of the overall configuration of a news-gathering activity support system 100according to the embodiment. The news-gathering activity support system 100 includes a plurality of cameras 101, a plurality of camera management terminals 102, a camera management system 103, a plurality of news-gathering activity planning systems 104 (image capture planning apparatuses), and a plurality of personal computers (PCs) 105. Note that FIG. 1 shows two cameras 101 and two camera management terminals 102 connected to the cameras 101, respectively, as well as two news-gathering activity planning systems 104 and two PCs 105 connected to the news-gathering activity planning systems 104, respectively, however the numbers of the devices are not limited thereto.

The camera management system 103 manages an application (hereinafter referred to as a "camera management application") for linking the cameras 101 and the news-gathering activity planning systems 104. The camera management system 103 may be configured using a server connected to a network such as the Internet, or may be configured using cloud computing. The camera management terminals 102 and the news-gathering activity planning systems 104 can access to the camera management application using a dedicated application for accessing the camera management application.

In a case where a user of the news-gathering activity planning system 104 (hereinafter referred to as a "company user") uses the camera management application, the user registers a company in the camera management system 103in advance. When a user of the camera 101 (hereinafter referred to as a "camera user") uses the camera management application, the camera user registers himself/herself and the camera 101 to be used with a desired company/companies among the companies registered with the camera management system 103. This allows the camera user to undertake image capture job based on the news-gathering activity plan of the company with which the camera user is registered. At this time, one camera user can register with one or more companies, and in a case where one camera user registers with a plurality of companies, the camera user can receive image capture requests based on the news-gathering activity plans using the same camera from the plurality of registered companies.

The camera 101 may be, for example, an image capturing apparatus such as a digital still camera or a digital video camera, or any electronic device with an image capturing function. Examples of the electronic devices include information processing devices such as tablet devices and personal computers, mobile phones, smartphones, robots, drones, etc. with a camera function. In FIG. 1, one camera 101 corresponds to one camera management terminal 102, but it is also possible to link a plurality of cameras to one camera management terminal. For example, when one camera user owns a plurality of types of cameras, the camera user and the plurality of types of cameras may be registered in the camera management system 103.

The planner connects to the news-gathering activity planning system 104 using the PC 105, and creates a news-gathering activity plan including information on the date and time of news-gathering activities (date and time of image capture job), the location of the news-gathering activities (location of image capture job), and the equipment to be used including a camera. The planner and the company user may be the same person or different people. When creating a news-gathering activity plan, the planner can view various camera information such as the type of the camera 101, usage status, and camera status from the camera management system 103 via the news-gathering activity planning system 104, and the planner can select the camera 101 to be used for the news-gathering activities while viewing the information on the camera 101. When the planner registers a news-gathering activity plan in the news-gathering activity planning system 104, the news-gathering activity planning system 104 registers the news-gathering activity plan in the camera management system 103. A news-gathering activity plan ID is assigned to the registered news-gathering activity plan.

When a news-gathering activity plan is registered, the camera management system 103 notifies the camera management terminal 102 corresponding to the camera 101 included in the news-gathering activity plan of the news-gathering activity plan to which a news-gathering activity plan ID has been assigned. In a case where the camera management terminal 102 undertakes the notified news-gathering activity plan, it sends a notification of undertaking the plan to the camera management system 103 and stores the news-gathering activity plan in the camera management terminal 102.

The camera 101 passes captured images and dynamic information that changes regardless of user operations, such as the location information, power information, and network connection status of the camera 101, to the camera management terminal 102. When the camera management terminal 102 receives dynamic information and images from the camera 101, if the images were captured while a news-gathering activity plan was being implemented, it links the images to the news-gathering activity plan ID and transmits the dynamic information and the images to the camera management system 103. The images may be either still images or moving images, and may also be an image with audio.

When the camera management system 103 receives images linked to the news-gathering activity plan ID from the camera management terminal 102, it sends the image linked to the news-gathering activity plan ID to the news-gathering activity planning system 104 of the company that registered the news-gathering activity plan. Also, when the camera management system 103 receives the dynamic information from the camera management terminal 102, the camera management system 103 updates the information of the camera 101 managed by the camera management system 103 according to cameraside disclosure settings, implementation news-gathering activity plan settings, and company-side disclosure settings described below.

### - Configuration of Information Processing Apparatus

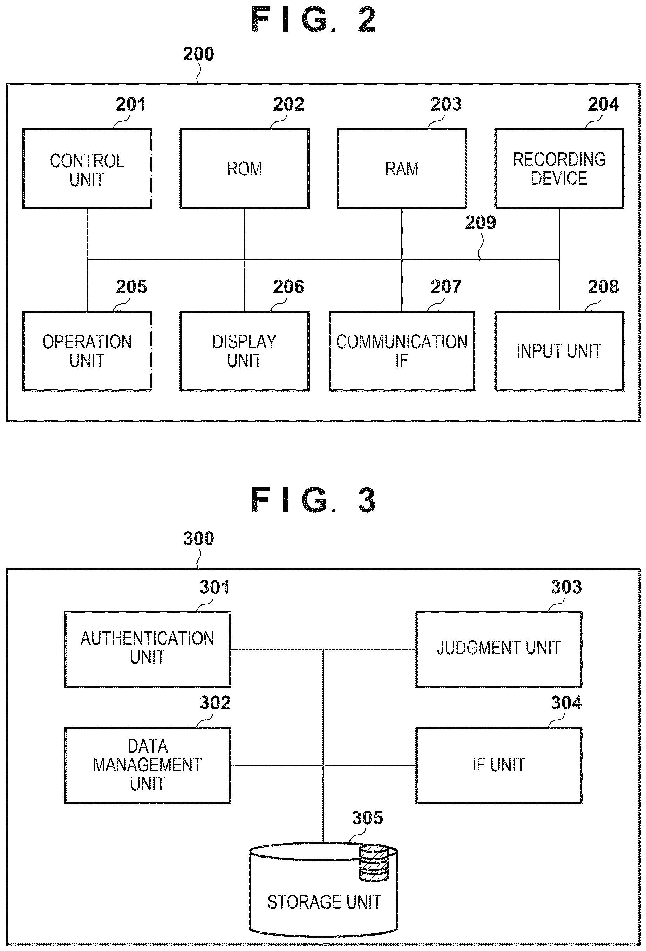

FIG. 2 is a block diagram illustrating a typical hardware configuration of devices used as the camera management terminal 102, the camera management system 103, and the news-gathering activity planning system 104. Actual forms of the apparatus having the configuration shown in FIG. 2 can be various, such as PCs, servers, smartphones, and tablet devices, but in this explanation they will be collectively referred to as an information processing apparatus 200.

In the information processing apparatus 200 shown in FIG. 2, a control unit 201 is a central processing unit (CPU) that cooperates with other components based on computer programs and controls the operation of the entire information processing apparatus 200. A ROM 202 is a read-only memory that records basic programs and data used for basic processing. A RAM 203 is a writable memory that functions as a work area for the control unit 201. A storage device 204 is a device that functions as a large-capacity memory such as a solid state drive (SSD), and stores various computer programs and data.

An operation unit 205 is composed of members for receiving instructions and commands input from a user, and includes to a keyboard, a mouse, a touch panel, etc. A display unit 206 displays commands input from the operation unit 205 and the responses output from the information processing apparatus 200 to those commands. A communication interface (IF) 207 relays data exchange with external apparatuses. An input unit 208 inputs data from external apparatuses. A system bus 209 controls the flow of data within the information processing apparatus 200.

### - Functional Configuration of Camera Management System

FIG. 3 is a block diagram illustrating the functional configuration of the camera management system 103, which is realized by executing a camera management application in the camera management system 103.

When the camera management terminal 102 or the news-gathering activity planning system 104 accesses the camera management system 103,an authentication unit 301 authenticates the accessing device or user, and determines which data recorded in a storage unit 305 (described later) may be accessed by the device or user.

A data management unit 302 performs management for recording data transmitted from the camera management terminals 102 and the news-gathering activity planning systems 104 via an IF unit 304 in an appropriate location in the storage unit 305. The data management unit 302 also performs management for providing the data recorded in the storage unit 305 to the camera management terminals 102 and the news-gathering activity planning systems 104 via the IF unit 304. The IF unit 304 is used for sending and receiving data to and from the camera management terminals 102 and the news-gathering activity planning systems 104.

The storage unit 305 stores company information and dynamic information including information on the functions, location information and power information of cameras. It also stores setting data such as dynamic information disclosure settings by the camera user (hereinafter referred to as "camera-side disclosure settings"), settings of an ongoing news-gathering activity plan (hereinafter referred to as "news-gathering activity plan implementation settings"), and dynamic information disclosure settings by the company user (hereinafter referred to as "company-side disclosure settings"), which are used to control the disclosure range of dynamic information. The camera-side disclosure settings, news-gathering activity plan implementation settings, and company-side disclosure settings will be described later.

A judgment unit 303 reads the camera-side disclosure settings, news-gathering activity plan implementation settings, and company-side disclosure settings stored in the storage unit 305, and restricts access to the dynamic information stored in the storage unit 305 according to the settings.

### -Overview of Disclosure Destination Control for Dynamic Information

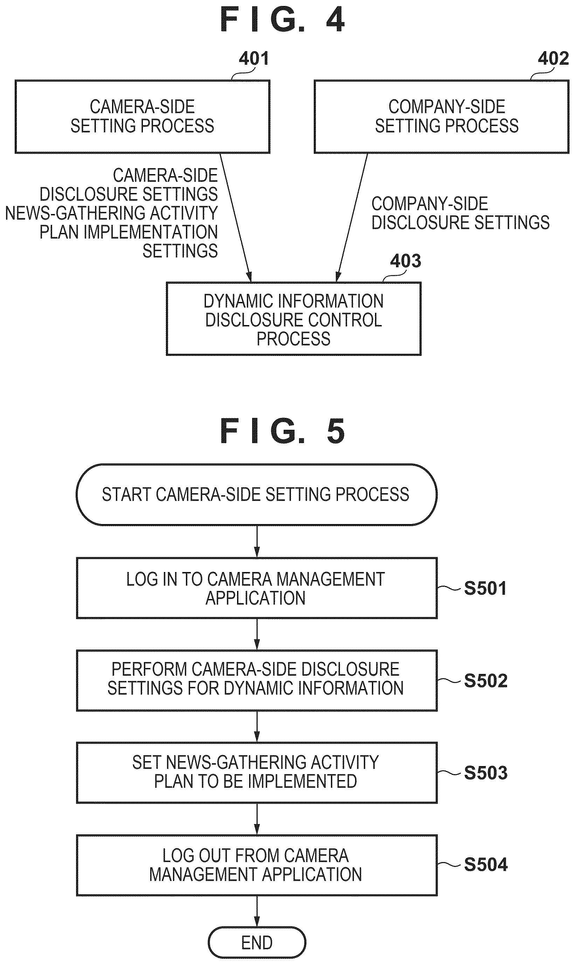

FIG. 4 is a block diagram illustrating an overview of disclosure destination control for dynamic information in this embodiment.

The disclosure destination control for dynamic information in this embodiment comprises a camera-side setting process 401, a company-side setting process 402, and a dynamic information disclosure control process 403, and each process is carried out independently at an arbitrary timing.

The camera-side setting process 401 is a process performed by the camera management terminal 102 on the camera management system 103, and involves the camera-side disclosure settings and the news-gathering activity plan implementation settings. The company-side setting process 402 is a process performed by the news-gathering activity planning system 104 on the camera management system 103, and involves the company-side disclosure settings. The dynamic information disclosure control process 403 is performed according to the camera-side disclosure settings, news-gathering activity plan implementation settings, and company-side disclosure settings.

The camera-side setting process 401, the company-side setting process 402, and the dynamic information disclosure control process 403 will be described in detail below.

### -Camera-Side Setting Process

FIG. 5 is a flowchart illustrating the camera-side setting process 401, which is performed by the camera management terminal 102 to set whether or not to disclose dynamic information.

First, in step S501, the camera user logs in to the camera management application managed by the camera management system 103 from the camera management terminal 102 using a dedicated application for accessing the camera management application.

In step S502, the camera-side disclosure settings for dynamic information are performed. The camera user selects the disclosure destination of dynamic information from among "disclose," "do not disclose," and "specify."

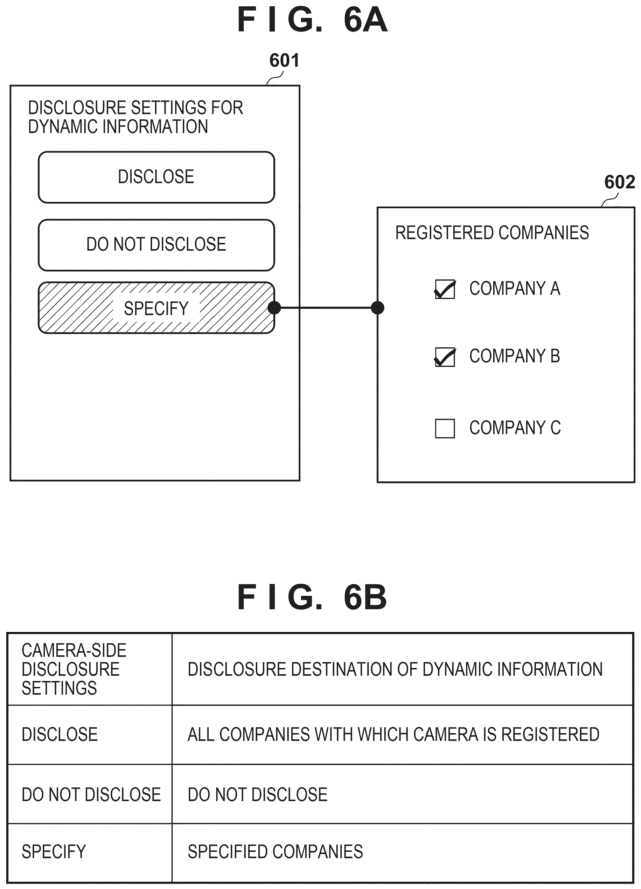

FIG. 6A shows an example of a setting screen displayed on the display unit of the camera management terminal 102 in step S502. A setting screen 601 displays options for "disclose," "do not disclose," and "specify." When "specify" is selected, a selection screen 602 is displayed, showing a list of companies that the camera 101 is registered as options. The camera user can select any of the companies to which dynamic information is to be disclosed from the displayed list of companies. Here, a company A and a company B are shown as selected.

FIG. 6B is a table showing combinations of the camera-side disclosure settings and the disclosure destinations of dynamic information corresponding to the camera-side disclosure settings. As shown in FIG. 6B, when "disclose" is selected, the dynamic information is disclosed to all companies with which the camera 101 is registered. When "do not disclose" is selected, the dynamic information is not disclosed to any companies. When "specify" is selected, the dynamic information is disclosed only to companies selected (specified) by the camera user from among companies with which the camera 101 is registered (Company A and Company B in the example shown in FIG. 6A).

Next, in step S503, the camera user selects a news-gathering activity plan to be implemented. The camera user selects a news-gathering activity plan from the news-gathering activity plans currently on order, or selects "none." The selection here changes the disclosure destination in the dynamic information disclosure control process 403, which will be described later. At this time, regardless of the camera-side disclosure settings set in step S502, the dynamic information is disclosed to the company that ordered the selected news-gathering activity plan.

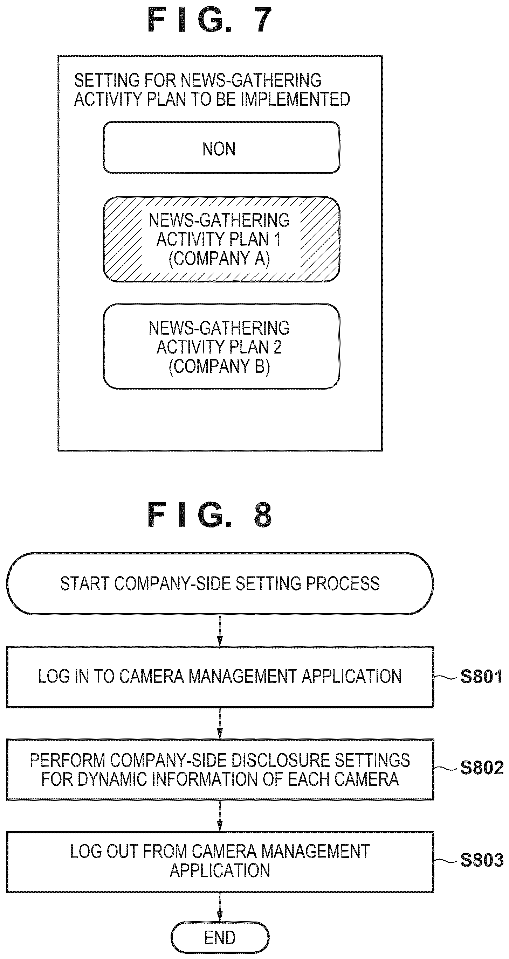

FIG. 7 shows an example of the setting screen displayed on the display unit of the camera management terminal 102 in step S503. Here, the example shows the case where "news-gathering activity plan 1 (company A)" is selected from the options of "none," "news-gathering activity plan 1 (company A)," and "news-gathering activity plan 2 (company B)." By confirming the selection in this state, subsequent image capturing with the camera 101 is deemed to be based on the news-gathering activity plan 1, which is a request from a company A, and the captured images are associated with the news-gathering activity plan ID of the news-gathering activity plan 1.

After completing the series of processes, in step S504, the camera user logs out from the camera management application and the camera-side setting process 401 ends.

### -Company-Side Setting Process

FIG. 8 is a flowchart illustrating the company-side setting process 402 for setting whether or not dynamic information is to be updated from the camera management system 103 in the news-gathering activity support system 100.

In step S801, a company user logs in to a camera management application managed by the camera management system 103 from the PC 105 via the news-gathering activity planning system 104.

In step S802, whether or not to disclose the dynamic information of each camera 101 registered with the company of the company user who logged in in step S801 is set. The company user selects the disclosure status of the dynamic information from either "disclose" or "do not disclose during news-gathering activities."

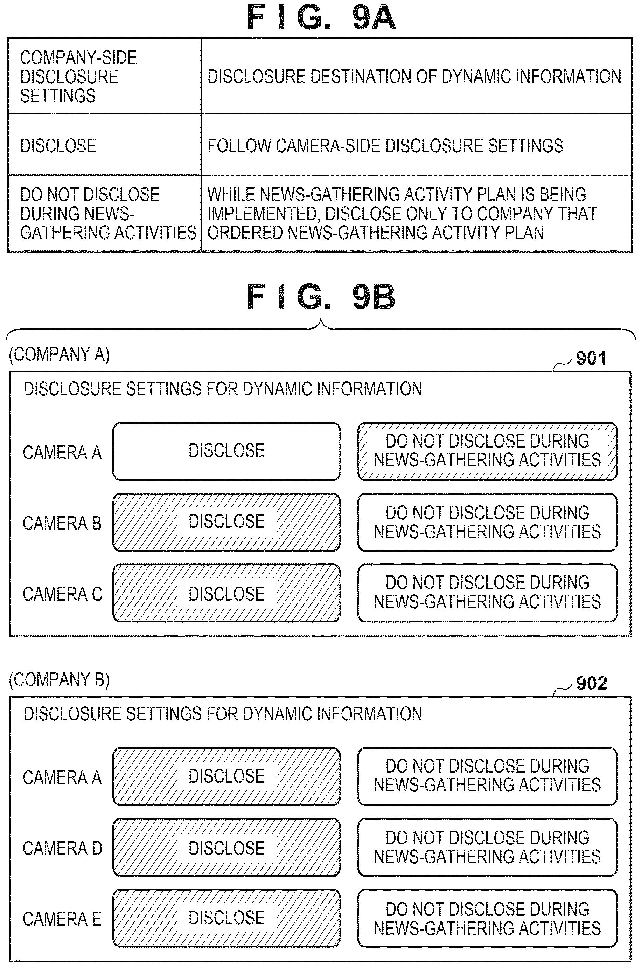

FIG. 9A is a table showing combinations of company-side disclosure settings and the disclosure destination of dynamic information corresponding to the company-side disclosure settings. As shown in FIG. 9A, if "disclose" is selected, the dynamic information is disclosed in accordance with the camera-side disclosure settings for dynamic information set via the camera management terminal 102. On the other hand, if "do not disclose during news-gathering activities" is selected, while the news-gathering activity plan ordered by that company is being implemented, the dynamic information is disclosed only to the company that ordered the news-gathering activity plan, and not to other companies. Furthermore, while the news-gathering activity plan is not being implemented, the dynamic information is disclosed in accordance with the camera-side disclosure settings for dynamic information set via the camera management terminal 102.

FIG. 9B illustrates an example of a setting screen displayed on the display unit of the PC 105 in step S802, and shows setting screens 901 and 902 displayed on the display units of the PCs 105 operated by company users of two companies (Company A and Company B). In this example, a camera A, a camera B, and a camera C are registered with a company A, the camera A, a camera D, and a camera E are registered with a company B, and the camera A is registered with both the company A and company B.

As shown in the setting screen 901, a company user of the company A has set camera A to "do not disclose during news-gathering activities" and the camera B and the camera C to "disclose." Also, as shown in the setting screen 902, a company user of the company B has set the camera A, the camera D, and the camera E to "disclose." Because the company A has set dynamic information of the camera A to "do not disclose during news-gathering activities " and the company B to "disclose," the disclosure destination of the dynamic information changes depending on which news-gathering activity plan is being implemented using the camera A. For example, if the camera A is being used to implement a news-gathering activity plan ordered by the company A, the dynamic information is notified only to the company A. On the other hand, if the camera A is being used to implement a news-gathering activity plan ordered by the company B, the dynamic information is disclosed in accordance with the camera-side disclosure settings for dynamic information setfrom the camera management terminal 102.

When the company-side disclosure settings are completed, in step S803, the company user logs out from the camera management application and the company-side setting process 402 ends.

### -Dynamic Information Disclosure Control Process

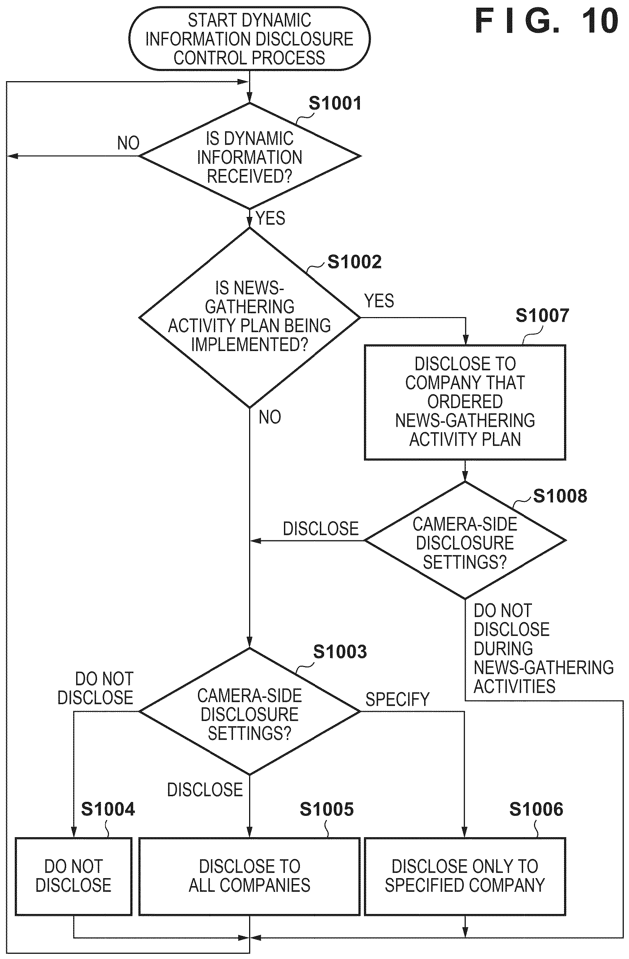

Next, the dynamic information disclosure control process 403 shown in FIG. 4 will be explained with reference to the flowchart in FIG. 10. Note that when the camera management terminal 102 receives dynamic information from the camera 101, it transmits the received dynamic information to the camera management system 103.

In step S1001, the judgment unit 303 of the camera management system 103 determines whether or not dynamic information of the camera 101 is received from any of the camera management terminals 102. The process of step S1001 is repeated until dynamic information is received, and when dynamic information is received, the process proceeds to step S1002.

In step S1002, the judgment unit 303 of the camera management system 103 determines whether a news-gathering activity plan is currently being implemented based on the news-gathering activity plan implementation settings set by the camera management terminal 102 which sent the dynamic information of the camera 101. Here, it determines whether a news-gathering activity plan was selected in step S503 of FIG. 5 performed immediately before this determination process by the camera management terminal 102 which sent the dynamic information of the camera 101. If a news-gathering activity plan was selected (if it is currently being implemented), the process proceeds tostep S1007, and if a news-gathering activity plan was not selected (if it is not currently being implemented), the process proceeds to step S1003.

In step S1003, the judgment unit 303 of the camera management system 103 determines the camera-side disclosure settings made by the camera management terminal 102 which sent the dynamic information of the camera 101. The determination made here determines the content selected in step S502 of FIG. 5, which was made immediately before this determination process, and as described above, is one of "disclose," "do not disclose," or "specify." If "do not disclose" is set, the process proceeds to step S1004; if "disclose" is set, the process proceeds to step S1005; and if "specify" is selected, the process proceeds to step S1006.

In step S1004, the judgment unit 303 of the camera management system 103 determines that the dynamic information of the camera 101 received in step S1001 will not be disclosed to any of the companies with which the camera 101 isregistered. At this time, the dynamic information stored in the storage unit 305 may not be updated with the received dynamic information, or the dynamic information may be updated and then controlled so that it cannot be accessed. As a result, even if a company user of any company views information about the camera 101 managed by the camera management system 103 via the news-gathering activity planning system 104, the company user will not be able to view at least the dynamic information of the camera 101 that is received while "do not disclosure" is set.

In step S1005, the judgment unit 303 of the camera management system 103 determines that the dynamic information of the camera 101 received in step S1001 will be disclosed to all companies. In this process, the data management unit 302 updates the dynamic information stored in the storage unit 305 with the received dynamic information and permits access to all companies with which the camera 101 is registered. This allows company users of all companies with which the camera 101 is registered to view the latest dynamic information of the camera 101 managed by the camera management system 103 via the news-gathering activity planning system 104.

In step S1006, the judgment unit 303 of the camera management system 103 determines that the dynamic information of the camera 101 received in step S1001 will be disclosed to the specified companies. In this process, the data management unit 302 updates the dynamic information stored in the storage unit 305 with the received dynamic information and permits access only to the specified companies among the companies with which the camera 101 is registered. As a result, only company users of the specified companies among all the companies with which the camera 101 is registered can view the latest dynamic information of the camera 101 managed by the camera management system 103 via the news-gathering activity planning system 104.

When the process of any one of steps S1004, S1005, and S1006 is completed, the process returns to step S1001.

On the other hand, if it is determined in step S1002 that a news-gathering activity plan was selected (is being implemented), in step S1007 the dynamic information of the camera 101 received in step S1001 is disclosed to the company that ordered the news-gathering activity plan selected by the camera management terminal 102. In this process, the data management unit 302 updates the dynamic information stored in the storage unit 305 with the received dynamic information and permits access only to the company that ordered the selected news-gathering activity plan, among the companies with which the camera 101 is registered. Note that this process is performed regardless of the camera-side disclosure settings.

Next, in step S1008, the judgment unit 303 of the camera management system 103 determines the company-side disclosure settings for the dynamic information of the camera 101 received in step S1001. The determination made here is the content selected in step S802 of FIG. 8, which was performed immediately before this determination process, and as described above, is either "do not disclose during news-gathering activities" or "disclose." If "do not disclose during news-gathering activities" is set, the process returns to step S1001. On the other hand, if "disclose" is set, the process proceeds tostep S1003, where the above-described process is performed, and then the process returns to step S1001.

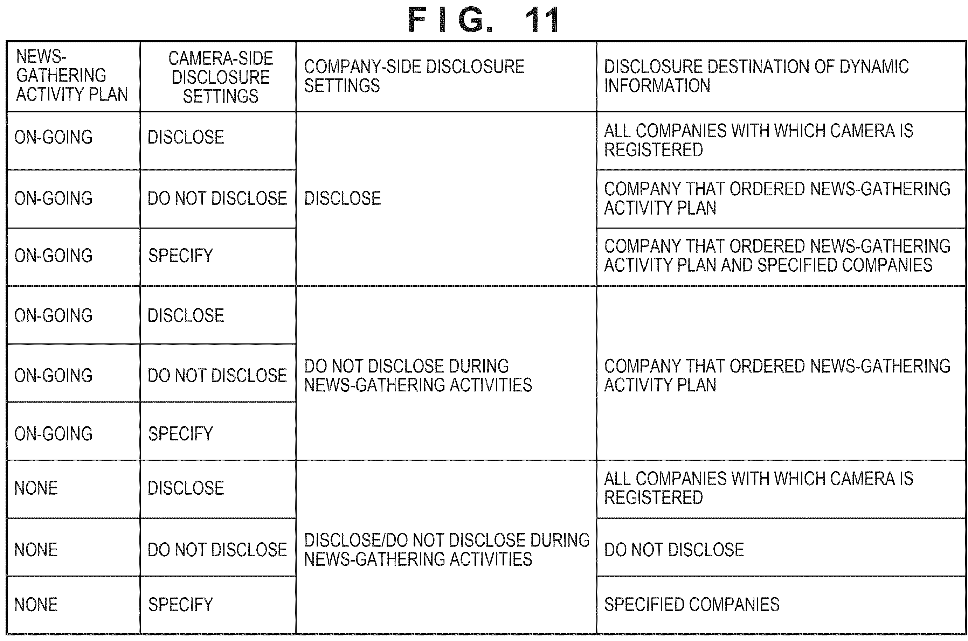

FIG. 11 is a table showing the disclosure destination of dynamic information based on the combination of the camera-side disclosure settings, the news-gathering activity plan implementation settings, and the company-side disclosure settings, according to the processing shown in FIG. 10. If a news-gathering activity plan is selected (on-going) and the company-side disclosure settings indicate "disclose," the dynamic information is disclosed to the company that ordered the news-gathering activity plan currently being implemented, and the disclosure destination of the dynamic information is determined in accordance with the camera-side disclosure settings. If a news-gathering activity plan is selected (on-going) and the company-side disclosure settings indicates "do not disclose during news-gathering activities," the dynamic information is disclosed only to the company that ordered the news-gathering activity plan currently being implemented. If no news-gathering activity plan is set, the disclosure destination of the dynamic information is determined in accordance with the camera-side disclosure settings, regardless of the company-side disclosure settings.

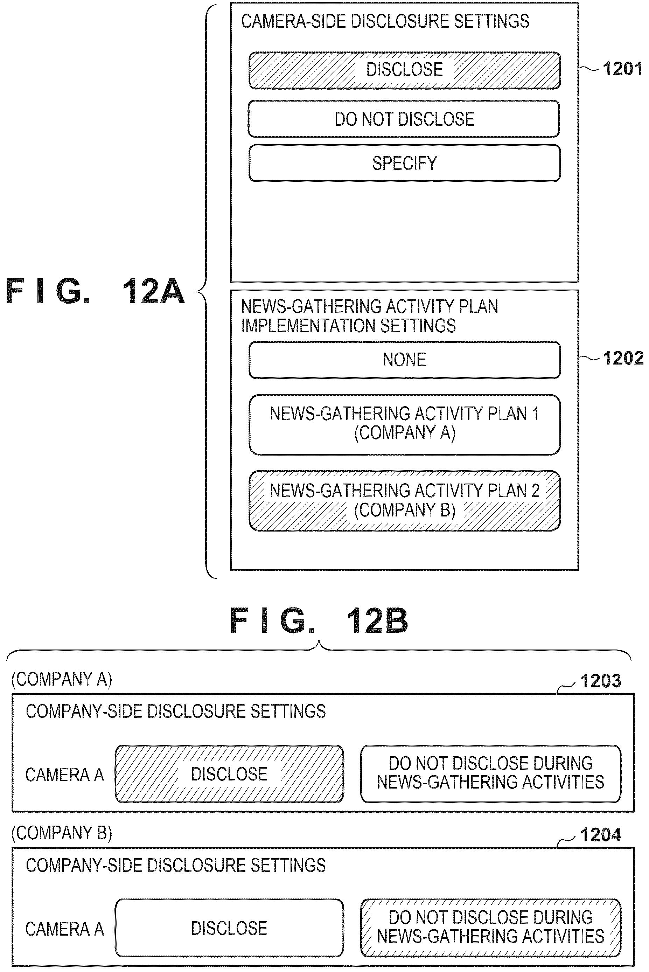

FIG. 12A is a diagram illustrating an example of the news-gathering activity plan implementation settings and the camera-side disclosure settings, and FIG. 12B is a diagram illustrating an example of the company-side disclosure settings. In this example, "disclose" is selected on a setting screen 1201 used for performing the camera-side disclosure settings, and "news-gathering activity plan 2 (company B)" is selected on a setting screen 1202 used for performing the news-gathering activity plan implementation settings. Furthermore, as shown on a setting screen 1203 used for performing the company-side disclosure settings, a company A sets the dynamic information of a camera A to "disclose," and as shown on a setting screen 1204, a company B sets the dynamic information of the camera A to "do not disclose during new-gathering activities."

According to the settings shown in FIGS. 12A and 12B, the disclosure of the dynamic information of the camera A is set to "disclose" for the company A and "do not disclose during new-gathering activities" for the company B. Therefore, during image capturing is performed using the camera A, the disclosure destination of the dynamic information changes depending on the news-gathering activity plan implementation settings. In this case, because the news-gathering activity plan 2 requested by the company B is selected, the dynamic information of the camera A is disclosed only to the company B.

If a news-gathering activity plan 1 requested by the company A is selected, the dynamic information of the camera A is disclosed to all companies with which the camera A is registered.

As described above, according to the first embodiment, dynamic information of a camera can be disclosed in accordance with the intentions of camera users and company users registered with the camera management system.

### <Second Embodiment>

Next, a second embodiment of the present disclosure will be described. The configuration of the news-gathering activity support system 100 in the second embodiment is the same as that described with reference to FIGS. 1 to 3, so a detailed description will be omitted.

In the first embodiment described above, the news-gathering activity plan implementation settings are performed at the same time as the camera-side disclosure settings. In contrast, in the second embodiment, the news-gathering activity plan implementation settings are performed at the start and end of the news-gathering activity plan by notifying the camera management system 103 of the news-gathering activity plan implementation settings from the camera management terminal 102. That is, in the camera-side setting process 401 shown in FIG. 5, the process of step S502 and the process of step S503 are performed at independent times.

When a camera user performs image capture based on an ordered news-gathering activity plan, the camera user typically selects the ordered news-gathering activity plan before starting the image capture and instructs the camera to start the image capture by pressing a start button or the like, thereby starting the image capture based on the news-gathering activity plan. A news-gathering activity plan ID is attached to images captured after this point. Furthermore, when the image capture based on the news-gathering activity plan is ended, the camera user instructs the camera to end the image capture based on the news-gathering activity plan by pressing an end button or the like, thereby ending the image capture based on the news-gathering activity plan. The news-gathering activity plan ID is not attached to images captured after this point. In the second embodiment, the news-gathering activity plan implementation settings are changed in response to instruction for starting and ending the news-gathering activity plan.

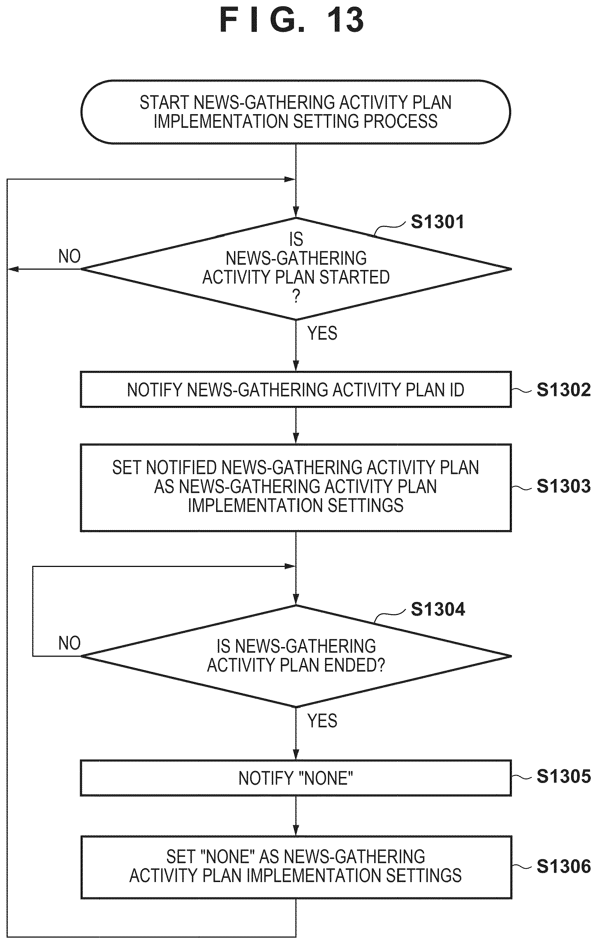

FIG. 13 is a flowchart of the news-gathering activity plan implementation setting process in the second embodiment. Note that, in the initial state, the storage unit 305 of the camera management system 103 has the news-gathering activity plan implementation settings for the camera 101 set to "none."

In step S1301, the camera management terminal 102 determines whether the camera user has selected a news-gathering activity plan to be implemented and instructed to start it. If the camera user has instructed to start it, the process proceeds to step S1302, where the camera management terminal 102 notifies the camera management system 103 of the news-gathering activity plan ID of the news-gathering activity plan instructed to start as the news-gathering activity plan implementation settings. In step S1303, the camera management system 103 changes the news-gathering activity plan implementation settings of the camera 101 corresponding to the camera management terminal 102 from which the notification is received in step S1302 to the notified news-gathering activity plan.

In step S1304, the camera management terminal 102 determines whether the camera user has instructed to end the news-gathering activity plan currently being implemented. If an instruction to end is received, the process proceeds to step S1305, where the camera management terminal 102 notifies the camera management system 103 of "none" as the news-gathering activity plan implementation settings. In response to this, in step S1306, the camera management system 103 changes the news-gathering activity plan implementation settings of the camera 101 corresponding to the camera management terminal 102 to "none" as received in step S1305.

Based on the news-gathering activity plan implementation settings set in this manner and the camera-side disclosure settings and the company-side disclosure settings set as described in the first embodiment, the dynamic information disclosure control process described with reference to FIG. 10 can be performed.

As described above, according to the second embodiment, in response to instructions to start and end image capture based on a news-gathering activity plan, the news-gathering activity plan ID or "none" is notified to the camera management system 103 as a news-gathering activity plan implementation settings. This makes it possible to determine the disclosure destination of dynamic information without omission based on the appropriate news-gathering activity plan implementation settings, even if the camera-side disclosure settings are not changed.

### <Modification>

In the first and second embodiments described above, the camera management system 103 stores the dynamic information of the camera 101 in the storage unit 305, and controls access to the dynamic information to control the disclosure destination of the dynamic information.

Alternatively, information on the registered camera 101, including the dynamic information, may be managed by the news-gathering activity planning system 104. In this case, the camera management system 103 notifies the disclosure destination determined by the process shown in FIG. 10 of the dynamic information, and if the news-gathering activity planning system 104 receives the dynamic information, it updates the dynamic information of the corresponding camera 101. This allows the planner to obtain information about the camera 101 without accessing the camera management system 103.

### <Other Embodiments>

The present disclosure may be applied to a system made up of a plurality of devices, or to an apparatus made up of a single device.

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or morecircuits to perform the functions of one or more of the above-described embodiment(s). The computer may comprise one or more processors (e.g., central processing unt (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. A management apparatus comprising:
first receiving means configured to receive, from each of a plurality of terminal apparatuses, dynamic information that changes regardless of user operation of each of one or more of image capturing apparatuses managed by the respective terminal apparatus, first settings indicating a disclosure destination of the dynamic information of the respective image capturing apparatus, and information regarding whether or not the respective image capturing apparatus is currently implementing an image capture plan;
second receiving means configured to receive, from each of a plurality of image capture planning apparatuses, an image capture plan that uses an image capturing apparatus that is permitted to be used among the one or more of the image capturing apparatuses, and second settings indicating a disclosure destination of the dynamic information of the image capturing apparatus used in the image capture plan;
determination means configured to determine the disclosure destination of the dynamic information of the respective image capturing apparatus based on the information regarding whether or not there is an image capture plan currently being implemented, the first settings, and the second settings; and
control means configured to control to disclose the dynamic information of the respective image capturing apparatus to the disclosure destination determined by the determination means.

2. The management apparatus according to claim 1, wherein the dynamic information includes at least one of location information indicating a location of the respective image capturing apparatus, power information, and a network connection status.

3. The management apparatus according to claim 1 or 2, wherein the respective terminal apparatus permits one or more of the plurality of image capture planning apparatuses to use the respective image capturing apparatus managed by the respective terminal apparatus.

4. The management apparatus according to claim 3, wherein the first settings are, for the respective image capture planning apparatuses permitted to use the respective image capturing apparatus, either to disclose the dynamic information, not to disclose the dynamic information, or to disclose the dynamic information only to a specified image capture planning apparatuses.

5. The management apparatus according to any one of claims 1 to 4, wherein in a case where there is no image capture plan currently being implemented, the determination means determines the disclosure destination of the dynamic information of the respective image capturing apparatus based on the first settings.

6. The management apparatus according to any one of claims 1 to 5, wherein in a case where there is an image capture plan currently being implemented, the determination means determines for the respective image capturing apparatus the disclosure destination of the dynamic information based on the second settings received from the image capture planning apparatus that created the image capture plan.

7. The management apparatus according to any one of claims 1 to 6, wherein, in a case where there is an image capture plan currently being implemented, the determination means determines for the respective image capturing apparatus to disclose the dynamic information to the image capture planning apparatus that created the image capture plan regardless of the first settings.

8. The management apparatus according to any one of claims 1 to 7, wherein the second settings indicate either to disclose or not to disclose the dynamic information during implementation of the image capture plan.

9. The management apparatus according to claim 8, wherein, if there is an image capture plan currently being implemented and the second settings received from the image capture planning apparatus that created the image capture plan indicate to disclose, the determination means determines for the respective image capturing apparatus the disclosure destination of the dynamic information based on the first settings.

10. The management apparatus according to any one of claims 1 to 9, wherein the first receiving means continuously receives the first settings and information on whether or not there is an image capture plan currently being implemented from the respective terminal apparatus.

11. The management apparatus according to any one of claims 1 to 9, wherein the first receiving means receives the first settings and information on whether or not there is an image capture plan currently being implemented from the respective terminal apparatus at timings independent of each other.

12. The management apparatus according to any one of claims 1 to 11, wherein the control means notifies, with respect to the respective image capturing apparatus, the dynamic information of a disclosure destination determined by the determination means via communication means.

13. A system comprising:
a plurality of terminal apparatuses, each of which manages one or more image capturing apparatuses;
a plurality of image capture planning apparatuses configured to create image capture plans that use any of the one or more image capturing apparatuses permitted to be used; and
a management apparatus according to any one of claims 1 to 12.

14. The system according to claim 13, wherein the plurality of terminal apparatuses, the plurality of image capture planning apparatuses, and the management apparatus are connected via communication.

15. A management method for information received from a plurality of teminal apparatuses comprising:
a step of receiving, from each of the plurality of terminal apparatuses, dynamic information that changes regardless of user operation of each of one or more of image capturing apparatuses managed by the respective terminal apparatus;
a step of receiving, from each of the plurality of terminal apparatuses, first settings indicating a disclosure destination of the dynamic information of the respective image capturing apparatus;
a step of receiving, from each of the plurality of terminal apparatuses, information regarding whether or not the respective image capturing apparatus is currently implementing an image capture plan;
a step of receiving, from each of a plurality of image capture planning apparatuses, an image capture plan that uses an image capturing apparatus that is permitted to be used among the one or more of the image capturing apparatuses
a step of receiving, from each of a plurality of image capture planning apparatuses, second settings indicating a disclosure destination of the dynamic information of the image capturing apparatus used in the image capture plan;
a step of determining the disclosure destination of the dynamic information of the respective image capturing apparatus based on the information regarding whether or not there is an image capture plan currently being implemented, the first settings, and the second settings;
a step of controlling to disclose the dynamic information of the respective image capturing apparatus to the determined disclosure destination.

16. A computer program comprising instructions which, when the programis executed by a computer, cause the computer to carry out the management method of claim 15.

17. A computer-readable storage medium storing the computer program of claim 16.
